# EUROPÄISCHE PATENTSCHRIFT

(11) **EP 0 834 529 B1**
(45) Veröffentlichungstag und Bekanntmachung des Hinweises auf die Patenterteilung: **06.05.2004**
(21) Anmeldenummer: 97117083.2
(22) Anmeldetag: 02.10.1997
(51) Int. Cl.: C08J 9/00, C08L 25/06, C08K 3/00, C08K 13/02

(54) **Halogenfreie Flammschutzmittel enthaltende expandierbare Styrolpolymerisate**
Expandable styrene polymers containing halogen-free flame retardants
Polymères styréniques expansibles contenant des agents ignifugeants exempts d'halogène

(30) Priorität: 04.10.1996 DE 19640886
(43) Veröffentlichungstag der Anmeldung: 08.04.1998
(73) Patentinhaber: BASF AKTIENGESELLSCHAFT, 67056 Ludwigshafen (DE)
(72) Erfinder: Scherzer, Dietrich, Dr., 67433 Neustadt (DE); Hahn, Klaus, Dr., 67281 Kirchheim (DE); Lorenz, Maria, Dr., 67281 Kirchheim (DE); Herrmann, Günter, Dr., 67133 Maxdorf (DE); Dietzen, Franz-Josef, Dr., 67071 Ludwigshafen (DE); Ehrmann, Gerd, Dr., 67146 Deidesheim (DE); Naegele, Dieter, Dr., 67550 Worms (DE)

(56) Entgegenhaltungen:
- EP-A- 0 257 516
- EP-A- 0 317 849
- WO-A-95/16736
- DATABASE WPI Section Ch, Week 9602 Derwent Publications Ltd., London, GB; Class A60, AN 96-017334 XP002042301 & JP 07 292 152 A (FUJIMASU J) , 7.November 1995

## Beschreibung

Die Erfindung betrifft halogenfreie Flammschutzmittel enthaltende, teilchenförmige expandierbare Styrolpolymerisate, ihre Herstellung sowie daraus hergestellte Schaumstoffe.

Polystyrolpartikelschaumstoffe sind seit langer Zeit bekannt und haben sich auf vielen Gebieten bewährt. Die Herstellung derartiger Schaumstoffe erfolgt durch Aufschäumen von mit Treibmitteln imprägnierten teilchenförmigen Styrolpolymerisaten und nachfolgendes Verschweißen der so hergestellten Schaumpartikel zu Formkörpern. Ein wesentliches Einsatzgebiet ist die Wärmedämmung im Bauwesen.

Bei vielen Anwendungen von Schaumstoffen, insbesondere im Bauwesen, wird gefordert, daß die Schaumstoffe flammgeschützt ausgerüstet sind. Es ist bekannt, daß dies durch Zusatz von Flammschutzmitteln, z.B. von Bromverbindungen, erreicht werden kann. Ein Gehalt von Bromverbindungen im Schaumstoff ist jedoch nicht unbedenklich, da im Brandfall korrosive Rauchgase entstehen können. Man hat deshalb versucht, von anderen Kunststoffen her bekannte halogenfreie Flammschutzmittel einzusetzen, wie roten Phosphor oder Phosphorsäureester. Dabei zeigte sich aber, daß die entsprechenden Schaumstoffe den Brandtest B 2 (nach DIN 4102) nicht bestehen.

JP-A- 07 292 152 beschreibt Flammschutzmittel mischungen, die CaCl₂, MgCl₂, Aluminiumhydroxid und/oder Na-Silikate sowie Chlor- und Phosphorhaltige Verbindungen enthalten.

Der Erfindung lag also die Aufgabe zugrunde, teilchenförmige expandierbare Styrolpolymerisate bereitzustellen, die halogenfreie Flammschutzmittel enthalten und zu Schaumstoffen verarbeitbar sind, die den Brandtest B 2 bestehen.

Diese Aufgabe wird erfindungsgemäß gelöst durch eine Flammschutzmittelmischung aus einer Phosphorverbindung und einem wasserabspaltenden Metallhydroxid.

Gegenstand der Erfindung sind also teilchenförmige expandierbare Styrolpolymerisate, die ein flüchtiges Treibmittel sowie als Flammschutzmittel mindestens 12 Gew.-% einer halogenfreien Mischung aus einer Phosphorverbindung und einem wasserabspaltenden Metallhydroxid enthalten.

Weitere Gegenstände der Erfindung sind verschiedene Verfahren zur Herstellung dieser expandierbaren Styrolpolymerisate sowie flammfest ausgerüstete Polystyrol-Schaumpartikel und deren Verwendung zur Herstellung von Schaumstoffen, die den Brandtest B 2 bestehen.

Die erfindungsgemäßen expandierbaren Styrolpolymerisate enthalten als Polymermatrix insbesondere Homopolystyrol oder Styrolcopolymerisate mit bis zu 20 Gew.-%, bezogen auf das Gewicht der Polymeren, an ethylenisch ungesättigten Comonomeren, insbesondere Alkylstyrole, Divinylbenzol, Acrylnitril oder α-Methylstyrol. Auch Blends aus Polystyrol und Copolymeren, insbesondere Polyacrylnitril und Polyphenylenether sind möglich.

Die Styrolpolymerisate können die üblichen und bekannten Hilfsmittel und Zusatzstoffe enthalten, beispielsweise Keimbildner, UV-Stabilisatoren, Kettenüberträger, Treibmittel, Weichmacher, Ruß, Pigmente und Antioxidantien. Sie werden mit den üblichen und bekannten Beschichtungsmitteln beschichtet, beispielsweise Metallstearaten, Glycerinestern und feinteiligen Silikaten. Ihre Partikelgröße liegt bevorzugt im Bereich von 0,2 bis 2 mm.

Die erfindungsgemäßen expandierbaren Styrolpolymerisate enthalten mindestens 12 Gew.-%, vorzugsweise 15 bis 30 Gew.-%, einer Mischung aus einer Phosphorverbindung und einem wasserabspaltenden Metallhydroxid.

Als wasserabspaltende Metallhydroxide werden vorzugsweise Magnesiumhydroxid und/oder Aluminiumhydroxid eingesetzt.

Als Phosphorverbindungen können anorganische oder organische Phosphate, Phosphite oder Phosphonate oder auch roter Phosphor eingesetzt werden. Bevorzugte Phosphorverbindungen sind Triphenylphosphat, Diphenylkresylphosphat, Ammoniumpolyphosphat oder Dimethylphosphonat.

Die teilchenförmigen expandierbaren Styrolpolymerisate können nach verschiedenen Methoden hergestellt werden.

Bei einem bevorzugten Verfahren wird in einem Extruder die Flammschutzmittelmischung in geschmolzenes Polystyrol eingearbeitet, die Schmelze danach granuliert und das Granulat mit Treibmittel nachimprägniert, vorzugsweise in wäßriger Suspension.

Bei einem anderen Verfahren wird in einem Extruder treibmittelhaltiges Polystyrol aufgeschmolzen, in die Schmelze wird die Flammschutzmittelmischung eingearbeitet und danach die Schmelze ausgepreßt und granuliert.

Schließlich kann man auch in einem Extruder Polystyrol aufschmelzen, in die Schmelze Treibmittel und die Flammschutzmittelmischung einarbeiten und danach die Schmelze auspressen und granulieren.

Die erfindungsgemäßen expandierbaren Styrolpolymerisate können zu Polystyrol-Schaumpartikeln, vorzugsweise mit einer Dichte von 10 bis 50 g·l⁻¹ und einer Partikelgröße von 2 bis 10 mm, aufgeschäumt werden. Hierzu werden die expandierbaren Teilchen vorgeschäumt. Dies geschieht durch Erwärmen mit Wasserdampf in sogenannten Vorschäumern.

Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

Dabei entstehen Schaumstoffe, die den Brandtest B 2 bestehen.

### Beispiele:

### Herstellung des Minigranulats

In den Beispielen wurde Polystyrol des Typs VPT der BASF AG (Mw etwa 200000) verwendet, das einen Melt-Flow-Index MFI (210°C/10 kp) von 70,4 ml/10 min und eine Viskositätszahl von 75 ml/g (0,5 % in Toluol, bei 25°C nach DIN 53 726) hatte. Das Polystyrolgranulat wurde in einem Schaufelmischer (Typ Lödige) mit den in der Tabelle angegebenen Mengen an Flammschutzmitteln vermischt. Das mit den Flammschutzmitteln vermischte Granulat wurde anschließend in einem Zweischnecken-Extruder (Werner & Pfleiderer, Stuttgart) mit einem Schneckendurchmesser von 30 mm (ZSK 30) aufgeschmolzen, in Stangform extrudiert, in einem Wasserbad gekühlt und anschließend mittels rotierender Messer granuliert. Die mittlere Partikelgröße betrug 1 x 1,5 mm. Das so hergestellte Granulat hatte eine Viskositätszahl von 69 ml/g.

### Umperlung zum treibmittelhaltigen Granulat

Jeweils 6 kg des so hergestellten Minigranulates wurden in einen 40 l Reaktor gegeben, der zuvor mit 21 kg demineralisiertem Wasser, 76 g Natriumpyrophosphat, 155 g Magnesiumsulfat-heptahydrat sowie 50 g Mersolat® K30 (40%ig in Wasser, Alkylbenzolsulfonat der Fa. Bayer) beschickt worden war. Der Reaktor wurde verschlossen, mit Stickstoff gespült und unter einem anfänglichem Stickstoffüberdruck von 1 bar auf 90°C erhitzt. Anschließend wurde während 15 Minuten 600 g einer Mischung aus iso- und n-Pentan (25/75) eingedrückt und die Suspension für weitere 10 Stunden bei 90°C gerührt. Danach wurde abgekühlt und der Reaktor entspannt. Die treibmittelhaltigen Perlen wurden über ein Drahtsieb abfiltriert und für mehrere Stunden in einem Luftstrom (Raumtemperatur) bis zu einem Innenwassergehalt von 0,3 Gew.-% getrocknet.

Die Perlen wurden anschließend in einem Schaufelmischer vom Typ Lödige mit 0,1 Gew.-% Glycerinmonostearat beschichtet und in einem handelsüblichen Vorschäumer vom Typ Rauscher 3 Minuten lang geschäumt. Die Dichte der vorgeschäumten Perlen lag bei 15 g/l, die Partikelgröße bei 6 mm.

Nach einer Zwischenlagerung von 12 Stunden wurden die Perlen in einem Laborautomaten der Firma Erlenbach bei.einem Dampfdruck von 1,2 bar zu quaderförmigen Schaumstoffkörpern verschäumt.

| Versuch | TPP (Gew.-%) | Mg(OH)₂ (Gew.-%) | HBCD (Gew.-%) | Brandtest B 2 |
|---|---|---|---|---|
| 1 | - | - | - | nicht bestanden |
| 2 | - | - | 5 | bestanden |
| 3 | 10 | - | - | nicht bestanden |
| 4 | - | 10 | - | nicht bestanden |
| 5 | 5 | 5 | - | nicht bestanden |
| 6 | 10 | 10 | - | bestanden |
| 7 | 10 | 5 | - | bestanden |
| TPP bedeutet Triphenylphosphat HBCD bedeutet Hexabromcyclododecan | | | | |

Die Versuche 1 bis 5 sind nicht erfindungsgemäß.

## Patentansprüche

1. Teilchenförmige expandierbare Styrolpolymerisate, die ein flüchtiges Treibmittel sowie ein Flammschutzmittel enthalten, **dadurch gekennzeichnet, daß** sie als Flammschutzmittel mindestens 12 Gew.-% einer halogenfreien Mischung aus einer Phosphorverbindung und einem wasserabspaltenden Metallhydroxid enthalten.

2. Teilchenförmige expandierbare Styrolpolymerisate nach Anspruch 1, **dadurch gekennzeichnet, daß** das wasserabspaltende Metallhydroxid Magnesiumhydroxid oder Aluminiumhydroxid ist.

3. Teilchenförmige expandierbare Styrolpolymerisate nach Anspruch 1, **dadurch gekennzeichnet, daß** die Phosphorverbindung roter Phosphor, ein organisches oder anorganisches Phosphat, Phosphit oder Phosphonat ist.

4. Teilchenförmige expandierbare Styrolpolymerisate nach Anspruch 1, **dadurch gekennzeichnet, daß** die Phosphorverbindung Triphenylphosphat, Diphenylkresylphosphat, Ammoniumpolyphosphat oder Diphenylphosphat ist.

5. Teilchenförmige expandierbare Styrolpolymerisate nach Anspruch 1, **dadurch gekennzeichnet, daß** das Gewichtsverhältnis von wasserabspaltendem Methallhydroxid zu Phosphorverbindung 1:1 bis 1:5 beträgt.

6. Teilchenförmige expandierbare Styrolpolymerisate nach Anspruch 1, **dadurch gekennzeichnet, daß** sie 3 bis 10 Gew.-% eines flüchtigen Treibmittels, vorzugsweise eines aliphatischen Kohlenwasserstoffs mit 4 bis 6 Kohlenstoffatomen, enthalten.

7. Verfahren zur Herstellung der expandierbaren Styrolpolymerisate nach Anspruch 1, **dadurch gekennzeichnet, daß** in einem Extruder die Flammschutzmittelmischung in geschmolzenes Polystyrol eingearbeitet, die Schmelze danach granuliert und das Granulat mit Treibmittel nachimprägniert wird.

8. Verfahren zur Herstellung der expandierbaren Styrolpolymerisate nach Anspruch 1, **dadurch gekennzeichnet, daß** in einem Extruder treibmittelhaltiges Polystyrol aufgeschmolzen wird, in die Schmelze die Flammschutzmittelmischung eingearbeitet und danach die Schmelze ausgepreßt und granuliert wird.

9. Verfahren zur Herstellung von expandierbaren Styrolpolymerisaten nach Anspruch 1, **dadurch gekennzeichnet, daß** in einem Extruder Polystyrol aufgeschmolzen wird, in die Schmelze Treibmittel und die Flammschutzmittelmischung eingearbeitet werden und danach die Schmelze ausgepreßt und granuliert wird.

10. Verfahren zur Herstellung von Polystyrolschaumpartikeln, **dadurch gekennzeichnet, daß** Flammschutzmittel enthaltende expandierbare Styrolpolymerisate nach Anspruch 1 aufgeschäumt werden.

11. Polystyrol-Schaumpartikel einer Partikelgröße von 2 bis 10 mm und einer Dichte von 10 bis 50 g·l⁻¹, **dadurch gekennzeichnet, daß** sie 12 bis 30 Gew.-% einer halogenfreien Mischung aus einer Phosphorverbindung und einem wasserabspaltenden Metallhydroxid enthalten.

12. Verwendung der Schaumpartikel nach Anspruch 11 zur Herstellung von Schaumstoffen, die den Brandtest B 2 (nach DIN 4102) bestehen.

## Claims

1. A particulate expandable styrene polymer which contains a volatile blowing agent and also a flame retardant, wherein the flame retardant is a halogen-free mixture of a phosphorus compound and a water-releasing metal hydroxide and is present in an amount of at least 12 % by weight.

2. A particulate expandable styrene polymer as claimed in claim 1, wherein the water-releasing metal hydroxide is magnesium hydroxide or aluminum hydroxide.

3. A particulate expandable styrene polymer as claimed in claim 1, wherein the phosphorus compound is red phosphorus, an organic or inorganic phosphate, phosphite or phosphonate.

4. A particulate expandable styrene polymer as claimed in claim 1, wherein the phosphorus compound is triphenyl phosphate, diphenyl cresyl phosphate, ammonium polyphosphate or diphenyl phosphate.

5. A particulate expandable styrene polymer as claimed in claim 1, wherein the weight ratio of water-releasing metal hydroxide to phosphorus compound is from 1:1 to 1:5.

6. A particulate expandable styrene polymer as claimed in claim 1 containing from 3 to 10 % by weight of a volatile blowing agent, preferably an aliphatic hydrocarbon having from 4 to 6 carbon atoms.

7. , A process for producing the expandable styrene polymer as claimed in claim 1, which comprises incorporating the flame retardant mixture into molten polystyrene in an extruder, then granulating the melt and subsequently impregnating the granules with blowing agent.

8. A process for producing the expandable styrene polymer as claimed in claim 1, which comprises melting blowing agent-containing polystyrene in an extruder, incorporating the flame retardant mixture into the melt and then extruding and granulating the melt.

9. A process for producing the expandable styrene polymer as claimed in claim 1, which comprises melting polystyrene in an extruder, incorporating blowing agent and the flame retardant mixture into the melt and then extruding and granulating the melt.

10. A process for producing polystyrene foam particles, which comprises foaming the flame retardant-containing expandable styrene polymer as claimed in claim 1.

11. Polystyrene foam particles having a particle size of from 2 to 10 mm and a density of from 10 to 50 g·l⁻¹ and containing from 12 to 30 % by weight of a halogen-free mixture of a phosphorus compound and a water-releasing metal hydroxide.

12. Use of foam particles as claimed in claim 11 for producing foams which pass the burning test B 2 (in accordance with DIN 4102).

## Revendications

1. Polymères styréniques expansibles sous forme de particules contenant un agent moussant superficiel ainsi qu'un agent ignifugeant, **caractérisés en ce qu'**ils contiennent comme agents ignifugeants au moins 12 % en poids d'un mélange exempt d'halogènes à partir d'un composé phosphoré et d'un hydroxyde métallique séparateur d'eau.

2. Polymères styréniques expansibles sous forme de particules selon la revendication 1, **caractérisé en ce que** l'hydroxyde métallique séparateur d'eau est l'hydroxyde de magnésium ou d'aluminium.

3. Polymères styréniques expansibles sous forme de particules selon la revendication 1, **caractérisés en ce que** le composé phosphoré est du phosphore rouge, un phosphate organique ou inorganique, un phosphite ou un phosphonate.

4. Polymères styréniques expansibles sous forme de particules selon la revendication 1, **caractérisés en ce que** le composé phosphoré est un triphénylphosphate, un diphenylcrésylphosphate, un polyphosphate d'ammonium ou un diphénylphosphate.

5. Polymères styréniques expansibles sous forme de particules selon la revendication 1, **caractérisés en ce que** le ratio pondéral d'hydroxyde métallique séparateur d'eau par rapport au composé phosphoré s'élève de 1:1 à 1:5.

6. Polymères styréniques expansibles sous forme de particules selon la revendication 1, **caractérisés en ce qu'**ils contiennent 3 à 10 % en poids d'un agent moussant superficiel, de préférence un hydrocarbure aliphatique avec 4 à 6 atomes de carbone.

7. Procédé de fabrication des polymères styréniques expansibles selon la revendication 1, **caractérisé en ce que** le mélange d'agents ignifugeants est mélangé au polystyrène fondu dans une extrudeuse, que la coulée est ensuite transformée en granulés et que le granulat est imprégné ultérieurement d'agent moussant.

8. Procédé de fabrication des polymères styréniques expansibles selon la revendication 1, **caractérisé en ce que** le polystyrène contenant un agent moussant est fondu dans une extrudeuse, que le mélange d'agents ignifugeants est mélangé à la coulée et que la coulée est ensuite pressée et transformée en granulés.

9. Procédé de fabrication des polymères styréniques expansibles selon la revendication 1, **caractérisé en ce que** le polystyrène est fondu dans une extrudeuse, que l'agent moussant et le mélange d'agents ignifugeants sont mélangés à la coulée et que coulée est ensuite pressée et transformée en granulés.

10. Procédé de fabrication de particules de mousse polystyrène, **caractérisé en ce que** des polymères styréniques expansibles contenant un agent ignifugeant selon la revendication 1 sont transformés en mousse.

11. Particules de mousse polystyrène d'une taille de particules de 2 à 10 mm et de densité de 10 à 50 g·l⁻¹, **caractérisées en ce qu'**elles contiennent 12 à 30 % en poids d'un mélange exempt d'halogènes à partir d'un composé phosphoré et d'un hydroxyde métallique séparateur d'eau.

12. Utilisation des particules de mousse selon la revendication 11, pour la fabrication de matériaux en mousse, qui passent le test de résistance au feu B 2 (selon la norme DIN 4102).
